# EUROPEAN PATENT APPLICATION

(11) **EP 4 682 484 A1**
(43) Date of publication of application: **21.01.2026**
(21) Application number: 25186789.1
(22) Date of filing: 01.07.2025
(51) Int. Cl.: G01G 11/00

(54) **WEIGHING APPARATUS**

(30) Priority: 18.07.2024 JP 2024114983
(71) Applicant: Ishida Co., Ltd., Kyoto-shi Kyoto 606-8392 (JP)
(72) Inventor: KAWAMURA, Ryoichi, Ritto-shi, Shiga, 520-3026 (JP); ONO, Toshio, Ritto-shi, Shiga, 520-3026 (JP)
(74) Representative: Gill Jennings & Every LLP

(57) **Abstract**

A weighing apparatus (1) according to an embodiment includes: a weighing unit (22) weighs a product (A to C) while conveying the product (A to C); a storage unit (101) stores a correction coefficient for correcting a weighing error occurring during the conveyance of the product (A to C) in association with the product (A to C); a designation unit (71) designates the product (A to C); and a control unit (100): acquires the correction coefficient corresponding to the product (A to C) designated by the designation unit (71) from the storage unit (101), corrects an actual measurement value of the weighing unit (22) by using the acquired correction coefficient, and outputs information indicating that a weight of the product (A to C) has not been corrected in a case where the correction coefficient is not stored in the storage unit (101).

## Description

### TECHNICAL FIELD

The present invention relates to a weighing apparatus.

### BACKGROUND ART

Conventionally, in a weighing apparatus that weighs a product while conveying the product, an error arises between an actual measurement value obtained during conveyance and an actual measurement value obtained while the product is stationary. Therefore, a deviation between an average value of the actual measurement values obtained during conveyance and the actual measurement value obtained while the product is stationary is registered in advance, and the actual measurement value obtained during conveyance is corrected on the basis of the registered deviation.

### CITATION LIST

### PATENT LITERATURE

Patent Literature 1: JP 2014-25831 A
Patent Literature 2: JP H07-60108 B

### SUMMARY OF THE INVENTION

However, the above-described correction is required in the case of weighing a relatively heavy product, and in a case where the weight of the product is equal to or less than a predetermined weight (for example, 2 Kg or less), the error falls within an allowable tolerance, and thus the correction does not have to be performed in some cases.

However, in the case of performing weighing and pricing according to the weight of the product, the weight of the product placed on a tray or the like is not constant. Therefore, when the product is conveyed under the assumption that the weight of the product is 2 Kg or less but in fact exceeds 2 Kg, there is a problem that the weighing and pricing are performed with an incorrect actual measurement value because the weighing error exceeds an allowable range.

The present invention has been made in view of the above problems, and an object of the present invention is to provide a weighing apparatus capable of preventing generation of an inaccurate product weight as described above.

A weighing apparatus according to an embodiment is summarized as indicating: a weighing unit configured to weigh a product while conveying the product; a storage unit configured to store a correction coefficient for correcting a weighing error occurring during the conveyance of the product in association with the product; a designation unit configured to designate the product; and a control unit configured to: acquire the correction coefficient corresponding to the product designated by the designation unit (71) from the storage unit (101), correct an actual measurement value of the weighing unit (22) by using the acquired correction coefficient, and output information indicating that a weight of the product has not been corrected in a case where the correction coefficient is not stored in the storage unit (101).

According to the present invention, it is possible to provide a weighing apparatus capable of preventing generation of an inaccurate product weight as described above.

### BRIEF DESCRIPTION OF THE DRAWINGS

Fig. 1 is a diagram illustrating an example of an overall configuration of a weighing apparatus 1 according to an embodiment.
Fig. 2 is a diagram illustrating an example of functional blocks of the weighing apparatus 1 according to an embodiment.
Fig. 3 is a diagram illustrating an example of a product master according to an embodiment.
Fig. 4 is a diagram illustrating an example of the product master according to an embodiment.

### DESCRIPTION OF EMBODIMENTS

Hereinafter, the present embodiment will be described in detail with reference to the attached drawings. In the following description of the drawings, the same or similar parts are denoted by the same or similar reference symbols. However, note that the drawings are schematic, and ratios of dimensions are different from actual ones. Therefore, specific dimensions and the like are determined in consideration of the following description. Moreover, there may be portions where dimensional relationships or proportions are different among the drawings. In this specification and the drawings, elements having substantially the same function and configuration are denoted by the same reference numerals to omit redundant description, and elements not directly related to the present invention are omitted.

### (First Embodiment)

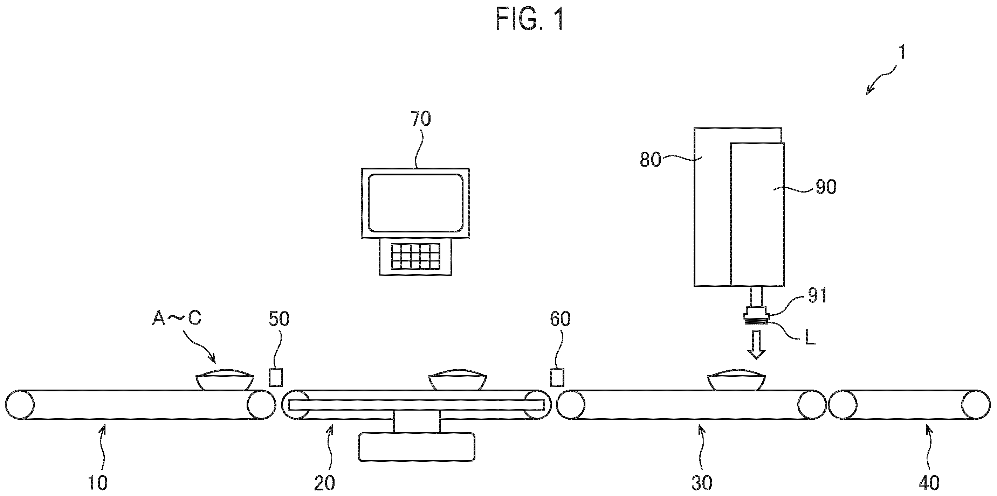

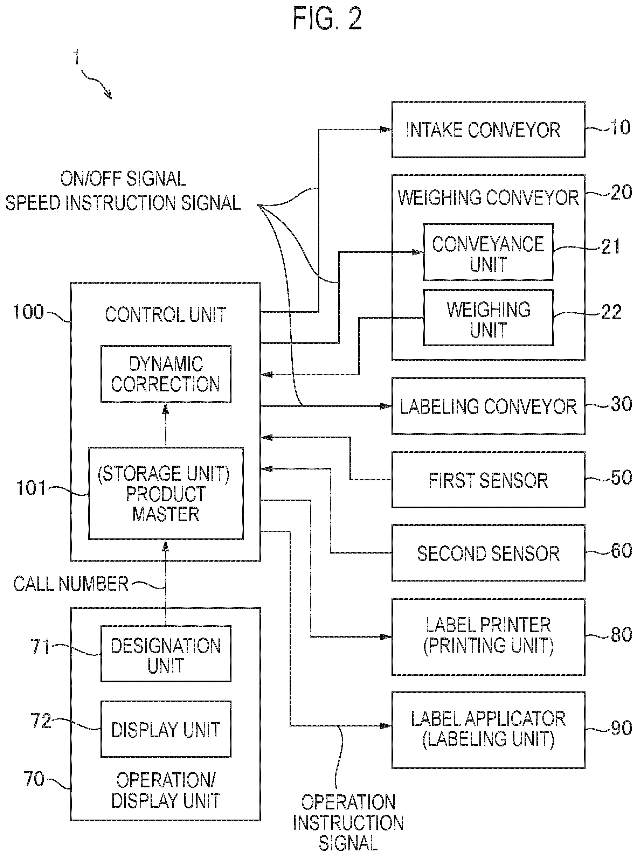

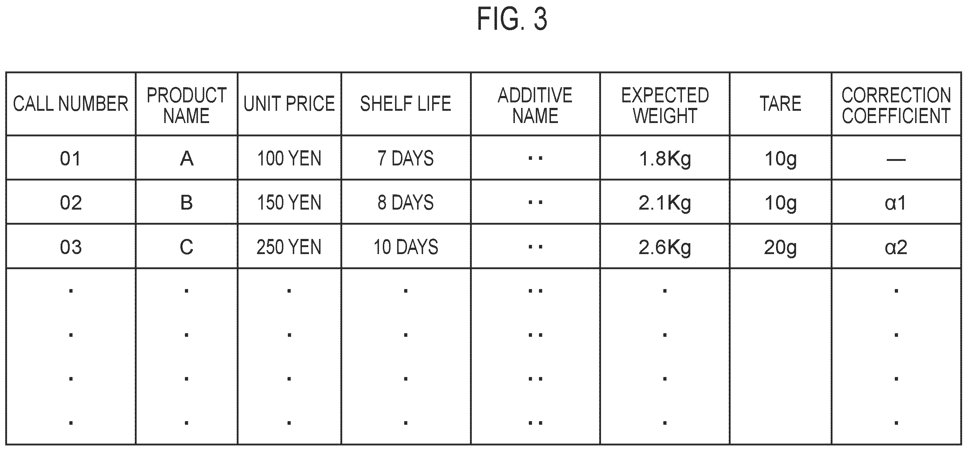

Hereinafter, a weighing apparatus 1 according to a first embodiment of the present invention will be described with reference to Figs. 1 to 3. Fig. 1 is a diagram illustrating an example of an overall configuration of the weighing apparatus 1 according to the present embodiment, Fig. 2 is a diagram illustrating an example of functional blocks of the weighing apparatus 1 according to the present embodiment, and Fig. 3 is a diagram illustrating an example of a product master according to the present embodiment.

As illustrated in Figs. 1 and 2, the weighing apparatus 1 according to the present embodiment includes an intake conveyor 10, a weighing conveyor 20, a labeling conveyor 30, a sorting conveyor 40, a first sensor 50, a second sensor 60, an operation/display unit 70, a label printer (printing unit) 80, a label applicator (labeling unit) 90, and a control unit 100.

The intake conveyor 10 is a device that takes in products A to C from the outside and conveys the products A to C to the weighing conveyor 20.

The first sensor 50 is a sensor that is provided between the intake conveyor 10 and the weighing conveyor 20 and detects front ends of the products A to C on the weighing conveyor 20.

The weighing conveyor 20 is a device that weighs the products A to C conveyed from the intake conveyor 10 while conveying the products A to C to the labeling conveyor 30.

As illustrated in Fig. 2, the weighing conveyor 20 includes a conveyance unit 21 and a weighing unit 22.

As described above, the conveyance unit 21 conveys the products A to C conveyed from the intake conveyor 10 to the labeling conveyor 30.

The weighing unit 22 weighs the products A to C while conveying the products A to C. Specifically, the weighing unit 22 acquires a weight (an actual measurement value obtained during conveyance) of each of the products A to C at a time point when a predetermined time has elapsed from a time point when the entire product is placed on the weighing conveyor, the time point being estimated on the basis of a time point when the front end of each of the products A to C is detected by the first sensor 50 (a time point when the front end of each of the products A to C reaches a discharge end of the weighing conveyor 20).

The second sensor 60 is a sensor that is provided between the weighing conveyor 20 and the labeling conveyor 30 and detects the front ends of the products A to C on the weighing conveyor 20.

The control unit 100 transmits a control signal to the intake conveyor 10, the weighing conveyor 20, the labeling conveyor 30, and the sorting conveyor 40 to control speeds and ON/OFF of operations of the intake conveyor 10, the weighing conveyor 20, the labeling conveyor 30, and the sorting conveyor 40.

In addition, the control unit 100 transmits a speed instruction signal to the intake conveyor 10, the weighing conveyor 20, the labeling conveyor 30, and the sorting conveyor 40 on the basis of conveyance speeds set for the products A to C, thereby controlling the conveyance speeds of the intake conveyor 10, the weighing conveyor 20, the labeling conveyor 30, and the sorting conveyor 40.

As illustrated in Fig. 2, the control unit 100 includes a storage unit 101.

The storage unit 101 stores a correction coefficient for correcting a weighing error occurring during conveyance of each of the products A to C in association with each of the products A to C. In addition, the conveyance speed when the correction coefficient is acquired is stored.

For example, the storage unit 101 stores a product master as illustrated in Fig. 3. Fig. 3 illustrates a part of the product master, and the product master stores, for example, a "call number", a "product name", a "unit price", a "shelf life", an "additive name", an "expected weight", a "tare", and a "correction coefficient" in association with each other.

Here, the "call number" indicates a number for calling each of the products A to C, the "product name" indicates a name (identification information) of each of the products A to C, the "unit price" indicates a price per unit weight of each of the products A to C, the "shelf life" indicates a shelf life of each of the products A to C based on a manufacturing date, the "additive name" indicates a name of an additive included in each of the products A to C, the "expected weight" indicates an expected weight of each of the products A to C placed on a tray, the "tare" indicates a weight of a tare such as the tray on which each of the products A to C is placed, and the "correction coefficient" indicates the correction coefficient for correcting the weighing error occurring during conveyance of each of the products A to C at a reference speed. A tray size, which is a size suitable for placing the product having the expected weight, may be stored instead of the expected weight.

As illustrated in Fig. 2, the operation/display unit 70 includes a designation unit 71 for calling the products A to C and a display unit 72 that displays an operation screen.

The designation unit 71 designates the products A to C according to a user operation. For example, each of the products A to C is designated by inputting the call number through the operation screen. The display unit 72 displays various operation screens according to a user operation or displays a display screen for the product name, the weight, and the like.

The control unit 100 acquires the correction coefficient corresponding to each of the products A to C (call numbers) designated by the designation unit 71 from the storage unit 101, and corrects the actual measurement value (the weight of each of the products A to C) of the weighing unit 22 by using the acquired correction coefficient (dynamic correction). In such a case, the control unit 100 may acquire the corrected weight of each of the products A to C (including the weight of the tare of each of the products A to C) by multiplying the actual measurement value of each of the products A to C obtained during conveyance by the correction coefficient.

In a case where the expected weight of each of the products A to C that is registered is equal to or larger than a reference weight (for example, 2 Kg), the control unit 100 acquires the correction coefficient corresponding to the expected weight of each of the products A to C from the product master, corrects the actual measurement value of each of the products A to C obtained during conveyance and acquired by the weighing unit 22, and subtracts, from the corrected weight, the tare weight of each of the products A to C acquired from the product master to obtain a net weight of each of the products A to C.

Subsequently, the control unit 100 calculates a sales price by multiplying the obtained net weight of each of the products A to C by the unit price, and outputs data regarding the calculated sales price to the label printer 80.

When calling the correction coefficient from the storage unit (product master) 101 on the basis of the call number, product information (the product name, the unit price, the shelf life, the additive name, the tare, and the like) is also read and set in a working area. At this time, information that does not change, such as the product name, the unit price, or the additive name, is output to the label printer 80 in advance, and information that changes, such as the weight, the sales price, or a date and time of a shelf life, is output to the label printer 80 at a time point when the information is determined.

Meanwhile, in a case where the correction coefficient corresponding to each of the products A to C designated by the designation unit 71 is not stored in the storage unit 101, the control unit 100 outputs information indicating that the weight of each of the products A to C has not been corrected. For example, in such a case, the control unit 100 outputs the information indicating that the weight of each of the products A to C has not been corrected to the label printer 80.

Here, in a case where the expected weight of each of the products A to C is less than the reference weight, a resulting weight error falls within an allowable range, and thus, the correction coefficients of the products A to C do not have to be registered. In such a case, the control unit 100 may obtain the net weights and the sales prices of the products A to C from the actual measurement values obtained during conveyance of the products A to C, and output the net weights and the sales prices to the label printer 80.

However, an amount of each of the placed products A to C varies to some extent. Therefore, the dynamic correction is required in a case where the actual measurement value of each of the products A to C exceeds the reference weight. However, since the correction coefficient is not registered in advance for each of the products A to C, the control unit 100 may stop the weighing conveyor 20 or exclude the products A to C from a conveyance line without issuing a product label.

The label printer 80 issues a product label L by printing the product information (the product name, the net weight, the sales price, the additive name, the unit price, and the like) input from the control unit 100.

That is, the label printer 80 prints the net weight and the sales price of each of the products A to C and other product information on the product label L on the basis of the weight of each of the products A to C corrected by the control unit 100.

The label applicator 90 attaches the product label L issued from the label printer 80 to each of the products A to C that are being conveyed.

Specifically, the label applicator 90 receives the product label L issued by the label printer 80 by using a label suction head 91 and lowers the label suction head 91 at a timing when each of the products A to C reaches a label attaching position to attach the product label L to each of the products A to C on the basis of an operation instruction signal from the control unit 100.

That is, the control unit 100 lowers the label suction head 91 of the label applicator 90 and attaches the product label L to a predetermined position of each of the products A to C at a time point when a predetermined time has elapsed from a time point when the front end of each of the products A to C is detected by the second sensor 60.

In addition, since an error between the actual measurement value obtained during conveyance and the actual weight of the product depends on the weight of the product, the storage unit 101 may obtain the correction coefficients of the products A to C for each weight range in which the error falls within an allowable limit within a weight range (for example, a range of 2000 g to 3500 g) assumed for a pre-packaged product, and store the correction coefficients according to the weight ranges of the products A to C.

In the example of Fig. 3, the correction coefficient of each of the products A to C that is within a weight range of 2000 g to 2500 g is stored as α1, the correction coefficient of each of the products A to C that is within a weight range of 2501 g to 3000 g is stored as α2, and the correction coefficient of each of the products A to C that is within a weight range of 3001 g to 3500 g is stored as α3.

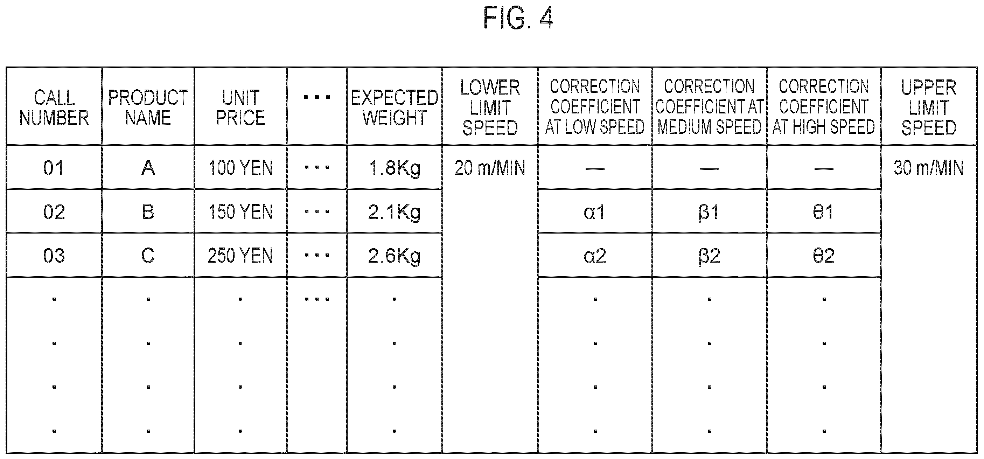

However, since the correction coefficient in this case depends on the speed, the correction coefficient in a case where the speed is constant is stored here. Then, for example, as illustrated in Fig. 4, in a case where the conveyance speed for the product is switched to a low speed, a medium speed, and a high speed, the correction coefficient obtained at each speed is stored. The resulting weight error during conveyance falls within the allowable tolerance at a speed lower than the low speed, and thus, the correction coefficient is not required here.

Therefore, in a case where the expected weight of the product is in a weight range that does not require correction and the correction coefficients of the products A to C are not stored in the storage unit 101, when the weights of the products A to C acquired by the weighing unit 22 fall within a predetermined weight range, the control unit 100 may stop the conveyance of the products A to C or exclude the products A to C from the conveyance line.

According to such a configuration, in a case where the correction coefficient is not stored in the product master for a product having a weight for which actual measurement value correction is not required, when the actual measurement value falls within a weight range that requires correction, the product label L is not issued, and thus it is possible to prevent an erroneous price from being displayed.

Further, in the weighing apparatus 1, the conveyance speed for the product is switched according to a time required to issue the product label L, and thus, the control unit 100 may control the conveyance speed for each of the products A to C on the basis of a length of the product label L of each of the products A to C.

Since the length of the label L is determined by, for example, a label format when the product information is called from the product master 101, in a case where the product label L is long, the control unit 100 decreases the conveyance speed of each of the conveyors 10, 20, 30, and 40 so that the issued product label L is held by the label suction head 91 until each of the products A to C reaches the label attaching position.

In this case, the actual measurement value is corrected by using the correction coefficient corresponding to the changed speed, and the sales price is calculated on the basis of the corrected value, and thus, it is possible to prevent an erroneous price from being displayed.

If the actual measurement value is a weight that does not require correction, information indicating that the weights of the products A to C have not been corrected may be displayed on the operation/display unit 70.

Hereinafter, a relationship among the weight of the product, the conveyance speed, and the correction coefficient will be described with reference to Fig. 4.

The storage unit 101 stores the correction coefficient corresponding to the conveyance speed for each weight range that requires correction.

For example, as illustrated in Fig. 4, the product master of the storage unit 101 stores, for example, the "call number", the "product name", the "unit price", the "expected weight", a "lower limit speed", a "correction coefficient at low speed", a "correction coefficient at medium speed", a "correction coefficient at high speed", and an "upper limit speed" in association with each other.

Here, the "lower limit speed" is a speed lower than the low speed, and this lower speed is regarded as a speed at which the actual measurement value does not need to be corrected, and thus, the correction coefficient is not obtained. In addition, the "upper limit speed" is a speed higher than the high speed, and also in this case, the correction coefficient is not obtained on the assumption that the product is not conveyed at this higher speed. Here, for example, 20 m/min is set as the "lower limit speed", and 30 m/min is set as the "upper limit speed", but the speeds are not limited thereto. The "upper limit speed" may be a limit speed of each of the conveyors 10, 20, 30, and 40.

The "correction coefficient at low speed" stores a plurality of correction coefficients α1 and α2 according to the expected weights of the products A to C, the "correction coefficient at medium speed" stores a plurality of correction coefficients β1 and β2 according to the expected weights, and the "correction coefficient at high speed" stores a plurality of correction coefficients θ1 and θ2 according to the expected weights of the products A to C. In this case, the "low speed" is set to, for example, 20 m/min to 23 m/min, the "medium speed" is set to 24 m/min to 26 m/min, and the "high speed" is set to 27 m/min to 30 m/min, but the speeds are not limited thereto.

In the product master illustrated in Fig. 4, the number of correction coefficients may be one or four or more instead of three, that is, the "correction coefficient at low speed", the "correction coefficient at medium speed", and the "correction coefficient at high speed".

According to such a configuration, the actual measurement value of the product can be appropriately corrected according to the expected weight of the product and the conveyance speed, so that it is possible to prevent an erroneous weight and an erroneous price from being displayed.

In the above embodiment, it is necessary to obtain each correction coefficient in advance on the basis of the expected weight and the conveyance speed set in advance. However, in a case where the conveyance speed determined by the label format called from the product master 101 is not included in the conveyance speed illustrated in Fig. 4, the control unit 100 may select a closer conveyance speed from among the conveyance speeds stored in the storage unit 101, change the speed of each of the conveyors 10, 20, 30, and 40 so as to be the selected conveyance speed, and correct the actual measurement value of each of the products A to C by using the correction coefficient corresponding to the changed conveyance speed and the expected weight. However, when selecting the conveyance speed, it is preferable to select a lower conveyance speed.

According to such a configuration, the correction coefficient can be selected on the basis of the expected weight and the conveyance speed, so that more accurate weights of the products A to C can be obtained.

According to the above embodiment, it is possible to prevent erroneous weighing even in a case where the conveyance speed for each of the products A to C is changed according to the length of the product label L.

Although the present invention is explained in detail using the above-mentioned embodiments, it will be apparent to those skilled in the art that the present invention is not limited to the embodiments described herein. The present invention can be implemented as modifications and changes without departing from the spirit and scope of the present invention defined by the description of the claims. Accordingly, the description of the present specification is for the purpose of illustration and is not intended to limit the present invention in any way.

### REFERENCE SIGNS LIST

- 1: Weighing apparatus
- 10: Intake conveyor
- 20: Weighing conveyor
- 21: Conveyance unit
- 22: Weighing unit
- 30: Labeling conveyor
- 40: Sorting conveyor
- 50: First sensor
- 60: Second sensor
- 70: Operation/display unit
- 71: Designation unit
- 72: Display unit
- 80: Label printer
- 90: Label applicator
- 91: Label suction head
- 100: Control unit
- 101: Storage unit
- L: Product label

## Claims

1. A weighing apparatus (1) **characterized by** comprising:
a weighing unit (22) configured to weigh a product while conveying the product;
a storage unit (101) configured to store a correction coefficient for correcting a weighing error occurring during the conveyance of the product in association with the product;
a designation unit (71) configured to designate the product; and
a control unit (100) configured to:
acquire the correction coefficient corresponding to the product designated by the designation unit (71) from the storage unit (101),
correct an actual measurement value of the weighing unit (22) by using the acquired correction coefficient, and
output information indicating that a weight of the product has not been corrected in a case where the correction coefficient is not stored in the storage unit (101).

2. The weighing apparatus (1) according to claim 1, **characterized in that**
the storage unit (101) is configured to store the correction coefficient according to a weight range of the product, and
in a case where the correction coefficient is not stored in the storage unit (101) and the actual measurement value of the product acquired by the weighing unit (22) falls within the weight range, the control unit (100) is configured to stop the conveyance of the product or excludes the product from a conveyance line.

3. The weighing apparatus (1) according to claim 1, **characterized in that**
the storage unit (101) is configured to store the correction coefficient according to a conveyance speed for the product.

4. The weighing apparatus (1) according to claim 3, **characterized in that**
the control unit (100) is configured to:
change the conveyance speed to the conveyance speed corresponding to the correction coefficient stored in the storage unit (101), and
correct the actual measurement value of the weighing unit (22) by using the correction coefficient corresponding to the changed conveyance speed.

5. The weighing apparatus (1) according to any of the preceding claims, further comprising:
a printing unit configured to print product information of the product on a product label on a basis of the weight of the product corrected by the control unit (100); and
a labeling unit configured to attach the product label printed by the printing unit to the product that is being conveyed.

6. The weighing apparatus (1) according to any of the preceding claims, **characterized in that**
the control unit (100) is configured to control a conveyance speed for the product on a basis of a length of a product label of the product.
